# EUROPEAN PATENT APPLICATION

(11) **EP 4 832 369 A1**
(43) Date of publication of application: **28.10.2026**
(21) Application number: 25382420.5
(22) Date of filing: 25.04.2025
(51) Int. Cl.: H04B 7/06, H01Q 3/24, H04B 7/08

(54) **DEVICE, SYSTEM AND METHOD FOR WIRELESS COMMUNICATION**

(71) Applicant: Universidad de Cantabria, 39005 Santander, Cantabria (ES)
(72) Inventor: TORRES JIMÉNEZ, Rafael Pedro, SANTANDER (ES); PÉREZ LÓPEZ, Jesús Ramón, SANTANDER (ES)
(74) Representative: Balder IP Law, S.L.

(57) **Abstract**

A device (100), comprising: a virtual antenna array (120, 320, 420) fed by a single RF transmission-reception chain (116), the virtual antenna array (120, 320, 420) comprising either a single real antenna configured to move mechanically to occupy M different antenna positions (25₁, ... 25_{M}) in space, or M real antennas disposed in M different antenna positions (25₁, ... 25_{M}) configured to be successively fed by the single RF transmission-reception chain by means of a RF switching technique; and processing means (110). The device is designed to: during a first time frame divided into M time slots, configure the virtual antenna array (120, 320, 420) to receive, by each of the M antenna positions (25₁, ... 25_{M}) in one time slot in which the respective antenna position (25₁, ... 25_{M}) is active, each antenna position being active in a single time slot, a pilot signal sent from each user terminal of a plurality of Q user terminals (500₁, ... 500_{q}, ...500_{Q}), and configure the processing means (110) to estimate, from the received pilot signals, a channel matrix of order M x Q; and during a second time frame divided into M time slots, configure the virtual antenna array (120, 20, 21) to: receive, by each of the M antenna positions (25₁, ... 25_{M}) in one time slot in which the respective antenna position (25₁, ... 25_{M}) is active, an information signal sent from each user terminal of the plurality of user terminals (500₁, ... 500_{q}, ...500_{Q}) and configure the processing means (110) to estimate, from the received signals and from the estimated channel matrix, the information signal sent by each of the Q user terminals; or transmit, by each of the M antenna positions (25₁, ... 25_{M}) in the time slot in which the respective antenna position (25₁, ... 25_{M}) is active, a downlink signal; or receive, by each of the M antenna positions (25₁, ... 25_{M}) in one time slot in which the respective antenna position (25₁, ... 25_{M}) is active, an information signal sent from each user terminal of the plurality of user terminals (500₁, ... 500_{q}, ...500_{Q}) and configure the processing means (110) to estimate, from the received signals and from the estimated channel matrix, the information signal sent by each of the Q user terminals; and transmit, by each of the M antenna positions (25₁, ... 25_{M}) in the time slot in which the respective antenna position (25₁, ... 25_{M}) is active, a downlink signal.

## Description

### TECHNICAL FIELD

The present invention relates to the field of telecommunications technology and, in particular, to wireless telecommunications. More specifically, the invention proposes a novel communication system based on the use of multiple antenna techniques in transmission and reception.

### STATE OF THE ART

In most wireless communication systems a device provides coverage to a plurality of user terminal devices, also referred to as user terminals, which communicate with the device in a duplex system. In wireless systems using multiple antennas in either transmission or reception sides, the duplex communication system is often based on the technique known as time division duplex (TDD), which emulates full-duplex communication over a half-duplex communication link, meaning that the communication channel is either used in the uplink communication or in the downlink communication. This may be the case, for example, of mobile communications developed under the 3GPP specifications, or other radio communications, such as long-range radio communications developed under the LoRa specifications. In mobile communications, the device is typically a base station and the user terminals may be mobile phones or other types of devices. In other radio communications the device may be called access point and the user terminals may be sensors or user devices equipped with sensors. In any case, the device communicates with the user terminals by establishing a point-to-multipoint network, where a dedicated channel is established between the device and each user terminal.

In point-to-multipoint systems, the base station or access point is usually equipped with multiple antennas, while the user terminals may have only one antenna. Well-known techniques based on multiple antennas are multiple input-multiple output (MIMO) and multi-user MIMO (MU-MIMO), applicable to point-to-multipoint systems, such as mobile communication systems. The most recent and efficient practical realization of MU-MIMO systems has been achieved through the concept of massive-MIMO, initially proposed by Marzetta [T. L. Marzetta, "Noncooperative Cellular Wireless with Unlimited Numbers of Base Station Antennas," IEEE Transactions on Wireless Communications, vol. 9, no. 11, pp. 3590-3600, November 2010, doi: 10.1109/TWC.2010.092810.091092.], and based on the use of a large number of antennas and their respective radio frequency (RF) chains at the base station or access point. In parallel, several space-temporal coding techniques have been proposed to take advantage of the use of multiple antennas in transmission and/or reception. The best-known and used in practice is the Alamouiti code [S. M. Alamouti, "A simple transmit diversity technique for wireless communications," IEEE Journal on Selected Areas in Communications, vol. 16, no. 8, pp. 1451-1458, Oct. 1998, doi: 10.1109/49.730453.], whose trade-off between simplicity and performance has made it very attractive in practice.

Isolated radiating elements or subarrays with a reduced number of antenna elements to virtually emulate, with the aid of mechanical movements, a physical large array in massive MIMO systems (see for example [J. R. Pérez, R. P. Torres, M. Domingo, L. Valle and J. Basterrechea, "Analysis of Massive MIMO Performance in an Indoor Picocell With High Number of Users," IEEE Access, vol. 8, pp. 107025-107034, 2020, doi: 10.1109/ACCESS.2020.3000602]), as well as virtual antenna arrays (see for example [X. Cai, E. L. Bengtsson, O. Edfors and F. Tufvesson, "A Switched Array Sounder for Dynamic Millimeter-Wave Channel Characterization: Design, Implementation, and Measurements," IEEE Transactions on Antennas and Propagation, vol. 72, no. 7, pp. 5985-5999, July 2024, doi: 10.1109/TAP.2024.3412187]), in which the physical array consisting of radiating elements is combined with RF switching systems in order to reduce acquisition times by eliminating the need for antenna movement, have been the focus of experimental channel characterization.

The fundamental concept underlying massive-MIMO, as outlined previously, involves physically equipping the base station with a large number of antennas and their corresponding RF chains. Primary issues derived from this arrangement include: 1) the limited physical space in which many antennas must be located, 2) the complexity, weight and volume of the base station or access point which limit their application in the provision of services that need to be economical and energy efficient, particularly if the access point or base station are to be mobile or easily reconfigurable, and 3) the fact that each of the numerous antennas requires a dedicated RF transmission/reception chain. This last issue is the most relevant as it presents both economic and technological challenges, as well as an integration problem involving multiple components (cables, amplifiers, filters, mixers) within a confined space.

In the case of sensor networks, which are the cornerstone of the applications and services collectively known as the Internet of Things (IoT), in addition to the previously mentioned issues, the following points should be highlighted: For current sensor networks, designed to connect devices in medium to large geographical areas, there is difficulty in transferring large amounts of data at high speeds. The previous issue primarily arises from the limited power available in the devices, combined with the low directivity of their antennas. The limited power availability is mainly due to the constraints in the power and lifetime of their batteries. Replacing or recharging batteries in extensive areas with a medium sensor density is a highly costly task, which is economically unfeasible. Latency and reliability are below the requirements of the new 5G standard, and even more so as proposed for these parameters in the upcoming 6G generation. There are limitations in security and robustness, primarily due to coverage issues and interference from other services or other sensor networks that share the same or nearby frequency bands. It requires a sufficiently dense deployment of access points, control centers, or gateways, which poses a technical but especially economic limitation to provide coverage over large areas.

Moreover, especially in sensor networks, the limitations of battery life and the difficulty of recharging them in many applications where they are dispersed, not precisely located and/or in areas that are difficult to access, mean that the technologies that can be grouped under the heading of Wireless Power Transfer are attracting more and more attention and there are already processes that have been confirmed in practice. In particular, RF wireless power transfer systems have been the focus of recent research (see for example [S.M.A. Huda, M.Y. Arafat and S. Moh "Wireless Power Transfer in Wirelessly Powered Sensor Networks: A Review of Recent Progress," Sensors, vol. 22, 2952, 2022, doi:10.3390/s22082952]).

### DESCRIPTION OF THE INVENTION

At least some of the drawbacks of conventional wireless communication systems are solved by the present invention. The invention proposes a device, system and method for establishing a point-to-multipoint wireless communication between a device, such as a base station or an access point, and a plurality of user devices or terminals (from now on, user terminals). The invention focuses on the radio interface of a wireless communication network.

The proposed device is equipped with a virtual antenna array. The device is responsible for providing radio coverage to the user terminals, for which it establishes unidirectional or bidirectional communication with the user terminals. The device provides coverage to multiple user terminals, which may be either fixed or mobile, and is also capable of receiving and/or transmitting information to multiple user terminals, realizing an effective space domain multiple access (SDMA), also known as beamforming. Depending on the application, the device can optionally supply wireless power for the operation of the user terminals.

The device may be fixed or mobile, meaning that it may be located at a fixed or moving platform. For example, the device may be mounted on an unmanned aerial vehicle (UAV), such as a drone, and be part of a wireless communication system, such as a sensor network.

The proposed communication system is a duplex system based on TDD. The invention can be implemented with different known multiplexing techniques, such as time division multiple access (TDMA), frequency division multiple access (FDMA), code Division multiple access (CDMA), or orthogonal frequency division multiple access (OFDMA). For example, the TDD-OFDMA combination, widely used in current 4G and 5G communication systems, can be implemented.

In a first aspect of this invention, a device is provided. The device comprises a virtual antenna array fed by a single RF transmission-reception chain. The virtual antenna array comprises either a single real antenna configured to move mechanically to occupy M different antenna positions in space, or M real antennas disposed in M different antenna positions configured to be successively fed by the single RF transmission-reception chain by means of a RF switching technique. The device also comprises processing means. The device is designed to:
during a first time frame divided into M time slots, configure the virtual antenna array to receive, by each of the M antenna positions in one time slot in which the respective antenna position is active, each antenna position being active in a single time slot, a pilot signal sent from each user terminal of a plurality of Q user terminals, and configure the processing means to estimate, from the received pilot signals, a channel matrix of order M x Q; and
during a second time frame divided into M time slots, configure the virtual antenna array to:
receive, by each of the M antenna positions in one time slot in which the respective antenna position is active, an information signal sent from each user terminal of the plurality of user terminals and configure the processing means to estimate, from the received signals and from the estimated channel matrix, the information signal sent by each of the Q user terminals; or
transmit, by each of the M antenna positions in the time slot in which the respective antenna position is active, a downlink signal; or
receive, by each of the M antenna positions in one time slot in which the respective antenna position is active, an information signal sent from each user terminal of the plurality of user terminals and configure the processing means to estimate, from the received signals and from the estimated channel matrix, the information signal sent by each of the Q user terminals; and transmit, by each of the M antenna positions in the time slot in which the respective antenna position is active, a downlink signal.

In each of the two time frames, all the M antenna positions of the virtual antenna array are successively activated. In other words, the device must go, one by one, through the M antenna positions twice (once per time frame).

Optionally, the device can go through the M antenna positions more than twice (for example, three or more times in three or more corresponding time frames).

Regarding in particular the first time frame, it is noted that the virtual antenna array must successively go through all the M antenna positions. Since there are as many antenna positions as time slots in the time frame (M), in each of the M time slots a different antenna position is active or occupied. Besides, each user terminal sends its own, specific pilot signal. Therefore, there are as many pilot signals as user terminals. Given a user terminal, its pilot signal is repeatedly sent, so that it can in principle be received by the M antenna positions of the virtual antenna array of the device. A pilot signal is a predefined code known by the device beforehand. For this reason, the device is able to estimate the channel upon reception of the pilot signals. The specific type of pilot signal is out of the scope of the present invention. With the received pilot signals, the processing means of the device can estimate the channel matrix, of order M x Q, wherein M is the number of antenna positions and Q is the number of user terminals. Thus, there are M x **Q elements** (h_{mq}). Each element h_{mq} is the estimated radiochannel established between the q-th user terminal and the m-th antenna position, wherein m is the m-th antenna position, 1 ≤ m ≤ M and q is the q-th user terminal, 1 ≤ q ≤ Q.

Regarding in particular the second time frame, it is noted that it can be mainly used for uplink communication (to receive information signals sent from the user terminals), or mainly for downlink communication (to transmit a downlink signal), or for both uplink and downlink communications.

When the second time frame is used for uplink communication, each user terminal sends M times (because the time frame is divided into M time slots) its information signal. The virtual antenna array will receive, in each time slot (which also means at each antenna position) a signal comprising mixed information of all user terminals sent at that time slot. In other words, the raw received signal does not discriminate which portion of information has been originated at which specific user terminal. Although each user terminal repeatedly sends (M times) the same information signal, each antenna position (at a corresponding time slot) receives a raw signal which will be, in principle, different from the other M-1 raw signals received at the other antenna positions. The processing means estimates, from the M received raw signals and from the estimated channel matrix, the information signal sent by each user terminal.

When the second time frame is used for downlink communication, the virtual antenna array sends, at each of the M antenna positions (and therefore at each time slot into which the time frame is divided) a downlink signal. Each downlink signal is sent to all user terminals. It can, however, carry specific information dedicated to one, some or all the user terminals. This downlink signal can have different purpose depending on the application, including data messages or general wideband signals such as audio, video or any other kind of data. For example, it can be an order directed to a user terminal (the user terminal may be a sensor or may comprise a sensor), such as an order to change the state of a sensor, or an order to request a sensor to keep on sending measurements; or introducing specific actions for actuators in industrial environments; or can be a power transfer pulse; or can be an ACK signal.

In embodiments of the invention, when the virtual antenna array is implemented as a single real antenna configured to move mechanically to occupy M different antenna positions in space, during the first time frame the single real antenna is configured to successively move along the M different positions and during the second time frame the single real antenna is configured to successively move along the M different positions.

In embodiments of the invention, when the virtual antenna array is implemented as M real antennas disposed in M different antenna positions configured to be successively fed by the single RF transmission-reception chain by means of RF switching, during the first time frame each of the M real antennas is successively fed by the single RF transmission-reception chain and during the second time frame each of the M real antennas is successively fed by the single RF transmission-reception chain.

The M antenna positions the virtual antenna array has, may follow any arbitrary trajectory. The trajectory must be traversed or gone through at least twice, once per time frame. This way, all positions (M positions) of the trajectory are traversed at least twice. The movement from one antenna position to a next antenna position (either physical movement of a single physical antenna, or connection of the single RF chain to the different M fixed antenna elements) can be either continuous or step-by-step. The antenna position will be electrically connected to a single RF chain.

In embodiments of the invention, the single real antenna or each of the M real antennas, as the case may be, can be implemented as a set of different radiating elements.

In embodiments of the invention, the device is further designed to, during the first time frame, configure the virtual antenna array to transmit, from each of the M antenna positions in the time slot in which the respective antenna position is active, a beacon signal.

In the context of the present invention, the expression "beacon signal" is used in a general way, meaning that its structure and functions may be different depending on the concrete realizations for different services and systems. Without being exhaustive, in the present invention it may have three functions: first, time and frequency synchronization; second, optionally, detection and identification of the network and/or cell that is providing coverage, meaning that a beacon signal allows user terminals to detect that a nearby device (such as base station or access point) is available for connection; and third, optionally, for an application requiring low-power consumption, the user terminal could be in an idle or sleeping mode, in which case the beacon may contain a "wake-up" signal, sometimes referred to as "ping slots", to activate the full TX/RX capabilities of the user terminal. At least the first function must be used in the present invention.

In embodiments of the invention, the processing means is further configured to estimate the channel matrix by successively estimating, after receiving each pilot signal by each respective antenna position, the radiochannels of the terminal users. Alternatively, the channel matrix may be estimated once the whole time frame has expired, and therefore all the antenna positions have received the pilot signals.

In a second aspect of the invention, a radio communication system is provided. The radio communication system comprises a plurality of user terminals and a device according to the first aspect of the invention.

The user terminals are typically located within a serving area, which is the area served by the device.

In embodiments of the invention, at least some of the plurality of user terminals are configured to, during the first time frame, successively send a pilot signal during each of the M times slots, and the device is configured, during the first time frame, to estimate the channel matrix from the pilot signals received from the at least some user terminals.

In embodiments of the invention, at least some of the plurality of user terminals are configured to, during the second time frame, successively send its own information signal during each of the M times slots, and the device is configured to estimate, from the received signals and from the estimated channel matrix, the information signal sent by each of the Q user terminals. For example, each user terminal sends M times (one per time slot) its own information signal, which, in general, is different from the information signal of other user terminals.

In embodiments of the invention, the device is configured to transmit, by each of the M antenna positions in the time slot in which the respective antenna position is active, a downlink signal, wherein the downlink signal is a precoded combination of dedicated signals to be sent to the at least some of the user terminals; and at least some of the plurality of user terminals are configured to, during the second time frame, receive the downlink signal and decode its dedicated signal. In general, a dedicated signal directed to a user terminal is different from the dedicated signals directed to other user terminals.

In embodiments of the invention, the device is configured to transmit, by each of the M antenna positions in the time slot in which the respective antenna position is active, a RF power transfer signal, wherein the downlink signal is a precoded combination of power transfer signals intended to transfer power to at least some of the Q user terminals; and at least some of the plurality of user terminals are configured to, during the second time interval, receive the downlink beamforming power transfer signal and collect the **RF** transported power.

In embodiments in which the device goes through the M antenna positions more than twice (for example, three times in three corresponding time frames), the third time frame can be dedicated at least partially to send **RF** power transfer signals from the device to the user terminals.

In a third aspect of the invention a method is provided. The method comprises:
during a first time frame divided into M time slots:
   from a virtual antenna array disposed at a device, the virtual antenna array being fed by a single power supply through a single **RF** transmission-reception chain, the virtual antenna array comprising either a single real antenna configured to move mechanically to occupy M different antenna positions in space, or M real antennas disposed in M different antenna positions configured to be successively fed by the single **RF** transmission-reception chain by means of **RF** switching,
   receiving by each of the M antenna positions in one time slot in which the respective antenna position is active, a pilot signal sent from each user terminal of a plurality of Q user terminals, and
   estimating, at the device, from the received pilot signals, a channel matrix of order M x Q,
during a second time frame divided into M time slots,
   receiving, at the virtual antenna array of the device, by each of the M antenna positions in one time slot in which the respective antenna position is active, an information signal sent from each user terminal of the plurality of user terminals; and estimating, at the device, from the received signals and from the estimated channel matrix, the information signal sent by each of the Q user terminals; or
   transmitting, by each of the M antenna positions of the device in the time slot in which the respective antenna position is active, a downlink signal; or
   receiving, at the virtual antenna array of the device, by each of the M antenna positions in one time slot in which the respective antenna position is active, an information signal sent from each user terminal of the plurality of user terminals; estimating, at the device, from the received signals and from the estimated channel matrix, the information signal sent by each of the Q user terminals; and transmiting, by each of the M antenna positions of the device in the time slot in which the respective antenna position is active, a downlink signal.

In embodiments of the invention, the method comprises, during the first time frame, transmitting from each of the M antenna positions in the time slot in which the respective antenna position is active, a beacon signal. The beacon signal may be intended mainly for synchronization in time and/or frequency of user terminals served by the device.

In embodiments of the invention, the method comprises, at processing means comprised in the device, estimating the channel matrix by successively estimating, after receiving each pilot signal by each respective antenna position, the radiochannels of the Q terminal users.

In a fourth aspect of the invention a method is provided. The method comprises:
during a first time frame divided into M time slots:
   from a plurality of user terminals, successively send a respective pilot signal during each of the M time slots,
   from a virtual antenna array disposed at a device, the virtual antenna array being fed by a single power supply through a single **RF** transmission-reception chain, the virtual antenna array comprising either a single real antenna configured to move mechanically to occupy M different antenna positions in space, or M real antennas disposed in M different antenna positions configured to be successively fed by the single RF transmission-reception chain by means of RF switching, receiving by each of the M antenna positions in one time slot in which the respective antenna position is active, the pilot signals sent from the user terminals, and
   estimating, at the device, from the received pilot signals, a channel matrix of order M x Q,
during a second time frame divided into M time slots,
   either sending, from at least some of the plurality of user terminals successively its own information signal during each of the M times slots; receiving, at the virtual antenna array of the device, by each of the M antenna positions in one time slot in which the respective antenna position is active, an information signal sent from each user terminal of the plurality of user terminals; and estimating, at the device, from the received signals and from the estimated channel matrix, the information signal sent by each of the Q user terminals; or
   transmitting, by each of the M antenna positions of the device in the time slot in which the respective antenna position is active, a downlink signal; and receiving, at least some of the plurality of user terminals, the downlink signal and decode its dedicated signal; or
   sending, from at least some of the plurality of user terminals successively its own information signal during each of the M times slots; receiving, at the virtual antenna array of the device, by each of the M antenna positions in one time slot in which the respective antenna position is active, an information signal sent from each user terminal of the plurality of user terminals; estimating, at the device, from the received signals and from the estimated channel matrix, the information signal sent by each of the Q user terminals; transmitting, by each of the M antenna positions of the device in the time slot in which the respective antenna position is active, a downlink signal; and receiving, at least some of the plurality of user terminals, the downlink signal and decode its dedicated signal.

In embodiments of the invention, during the first time frame, prior to, from the plurality of user terminals, successively sending a respective pilot signal during each of the M time slots, the method comprises transmitting by each of the M antenna positions of the device, in one time slot in which the respective antenna position is active, a beacon signal.

In embodiments of the invention, during the second time frame, prior to any other thing, the method comprises transmitting, by each of the M antenna positions of the device in the time slot in which the respective antenna position is active, a beacon signal.

In a fifth aspect of the invention a computer program product is provided. The computer program product comprises instructions which, when the program is executed by a computer, cause the computer to carry out the steps of the method of the third aspect of the invention.

The proposed device, system and methods therefore address some unresolved technical issues in multiple application fields of wireless communications. On the one hand, the device requires a single RF chain, which results in a significant reduction in system complexity, size and weight. This is especially relevant when considering services where the device, such as an access point or a base station, may be mounted on drones, or other platforms, fixed or mobile, with reduced size structures. For instance, the invention enables to be successfully applied to serve a large number of sensors used in the loT domain, distributed over extensive areas, and particularly in hard-to-reach locations (forests, large plantations, the sea, etc.). It is also applicable to communications between people, preferably for the private mobile radio communications (PMR) type, with the current leading standard being TETRA and its recent evolutions. The invention is also expected to be integrated/compatible with public networks such as 5G and 6G.

Another important advantage is the relative simple signal processing while providing the known benefits of very more complex and expensive systems: array gain, spatial multiplexing, high reliability, and consequently reducing latency; and high spectral efficiency through spatial multiplexing.

Also of great importance, the invention enables the efficient implementation of wireless power transfer (WPT) techniques. The latter is crucial when deploying sensor networks in hard-to-reach geographical areas.

In addition, optionally, the device is also capable of receiving and/or transmitting information to another node or gateway; which may also be either fixed or mobile. The main characteristic from the point of view of the network architecture is that the communication between the multiple user terminals and the node or gateway, in the event this communication is required, is established through the device. The device is responsible for providing radio coverage to the user terminals, establishing unidirectional or bidirectional communication with the user terminals, and optionally supplying wireless power for their operation.

Furthermore, the proposed methods and systems can be implemented to operate across any frequency range and bandwidth, both for signal transmission and reception. In any case, the systems that are manufactured should comply with the international regulations for electromagnetic spectrum usage established by the International Telecommunication Union (ITU).

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 schematically shows a wireless communication system that may be implemented according to embodiments of the present invention.
Figure 2 schematically shows a device according to embodiments of the present invention.
Figures 3A-3D shows examples of possible trajectories followed by the virtual antenna array comprised in the device of the present invention. Figure 3A shows a meanderline trajectory. Figure 3B shows an elliptical trajectory. Figure 3C shows a linear trajectory. Figure 3D shows a circular trajectory.
Figure 4A schematically shows a virtual antenna array implemented as a single antenna element that can describe a circular trajectory defining M different positions.
Figure 4B schematically shows a virtual antenna array implemented as a set of M antenna elements, each antenna element being disposed at a different position defining a circle.
Figure 5 schematically represents a structure of a first time frame according to embodiments of the invention.
Figure 6 schematically represents a structure of a second time frame according to embodiments of the invention.
Figure 7 shows the canonical field and the trajectory to be followed by a UAV according to an example of the present invention.
Figure 8 schematically represents the omnidirectional coverage of an antenna used in an example of the present invention.
Figure 9 show details of the antenna beamwidths in an example of the present invention.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing apparatuses and results according to the invention.

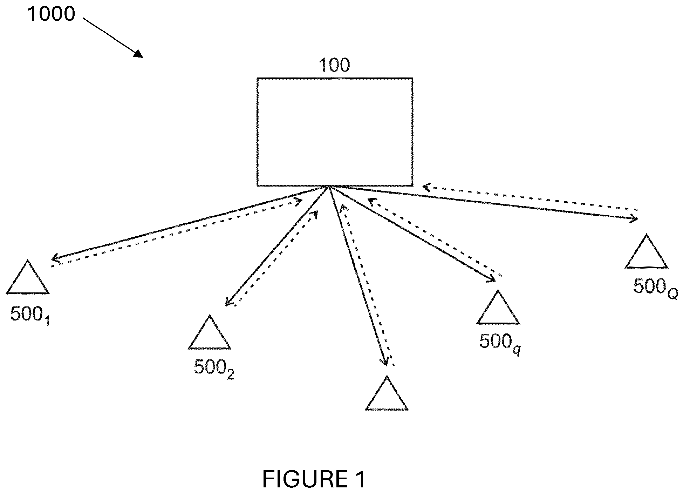

Figure 1 schematically illustrates a wireless communication system 1000 in which a device 100 communicates with a plurality of user terminals 500₁, 500₂, ... 500_{q}, ..., 500_{Q}. In general, there are Q user terminals and q denotes the q-th user terminal. The communication from the device 100 is preferably point-to-multipoint. In specific applications it may, however, be a point-to-point or broadcast communication. Nonlimiting examples of systems are mobile telephony systems or systems of sensing devices, for example systems in which a device 100 communicates with sensors or with user terminals equipped with sensing capabilities. When the system is a mobile telephony system, the device 100 is adaptable to be compatible with the 3GPP specifications. In this case the device 100 may be a base station. When the system carries out other types of communications, such as communication with sensors, the device 100 is adaptable to be compatible with the LoRa specification. In this case the device 100 may be an access or gateway point. The device 100 may be a network device, meaning that it belongs to a communication network with which it communicates through additional communication means, not shown, and which are out of the scope of the present invention. The device 100 may be static, meaning that it is disposed in a specific location, or mobile, meaning that it can move. For example, a mobile device 100 may be embarked in a drone or UAV, and/or be part of an unmanned aerial system (UAS).

To carry out point-to-multipoint communications, the device 100 is equipped with multiple antennas (not shown in Figure 1), while the user terminals 500₁, 500₂, ... 500_{q}, ..., 500_{Q} may have only one antenna (not shown). In particular, the device 100 is equipped with a virtual antenna array. Such a system is referred to as MIMO system, and more precisely MU-MIMO system. In Figure 1, the communication from the device 100 towards the user terminals 500₁, 500₂, ... 500_{q}, ..., 500_{Q} (downlink communication, DL) is represented by continuous arrows, while the communication from the user terminals 500₁, 500₂, ... 500_{q}, ..., 500_{Q} to the device 100 (uplink communication, UL) is represented by dotted arrows.

The user terminals 500₁, 500₂, ... 500_{q}, ..., 500_{Q} are preferably equipped with a single antenna, which in general does not necessarily require high levels of directivity or gain. The total number of user terminals 500₁, 500₂, ... 500_{q}, ..., 500_{q}, Q, in a service area (SA), can be spatially distributed in a manner that can be either homogeneous or not, completely random in their spatial positions, or organized according to a predetermined criterion based on the service to be provided. The elemental antenna forming the virtual antenna array of the device 100 is characterized by a radiation pattern with a beamwidth sufficiently wide to illuminate, i.e., provide coverage, to the SA.

Optionally, the total number of user terminals 500₁, 500₂, ... 500_{q}, ..., 500_{Q} may be grouped into subgroups containing *Qₙ* user terminals, distributed within an area known as the n-th cell, *Cₙ*. The sum of the areas of the N possible cells must cover the entire SA. In this case, the elemental antenna forming the virtual antenna array of the device 100 is characterized by a radiation pattern with a beamwidth sufficiently wide to illuminate, i.e., provide coverage, to a predefined basic area, the n-th cell (*Cₙ*), which contains the *Qₙ* user terminals of the subgroup located within the *Cₙ* cell.

Therefore, the wireless communication system 1000 is a virtual-array multiple input-multiple output (VA-MIMO) communication system. In particular, the VA-MIMO communication system is a duplex system based on the technique known as TDD.

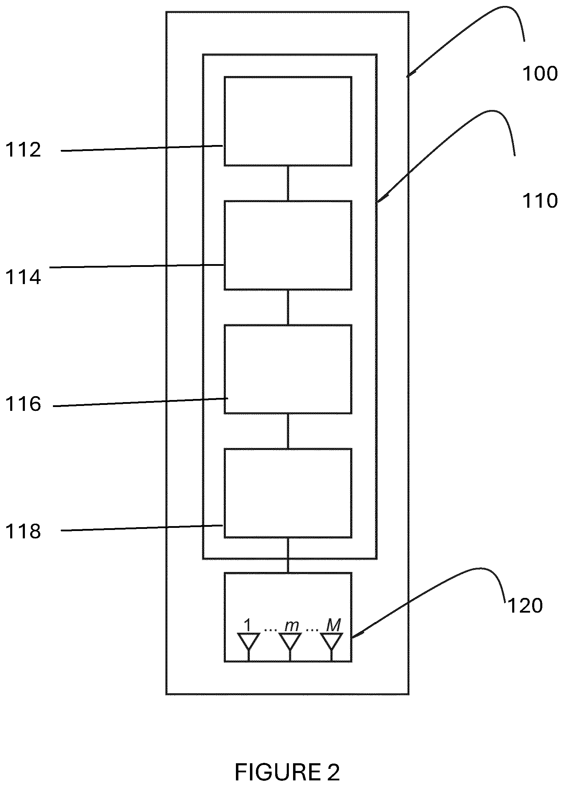

Figure 2 schematically shows a device 100 according to embodiments of the present invention. The device 100 may be a base station, an access point, or any other communications device capable of operating as a serving device in a (MU)-MIMO system. The device 100 is equipped with two main functional blocks, namely processing means 110 and a virtual antenna array 120. The processing means 110 may be implemented as one or more conventional processors and storage means (i.e. memory), which are out of the scope of the present invention.

The processing means 110 in turn comprises a data stream 112, i.e. a digital signal comprising a set of symbols previously modulated according to the specific realization, a digital signal processing (DSP) block 114, for instance dedicated to tasks concerning frame structure configuration as well as precoding and coding algorithms, an RF transceiver or RF chain 116, mainly dedicated to upconvert and downconvert the digital signals to the RF frequencies, and a virtual array (VA) controller 118, dedicated to control by sending specific orders either the antenna element movement or the RF switching system, depending on the realization. The VA controller 118 is in turn physically connected to the virtual antenna array 120.

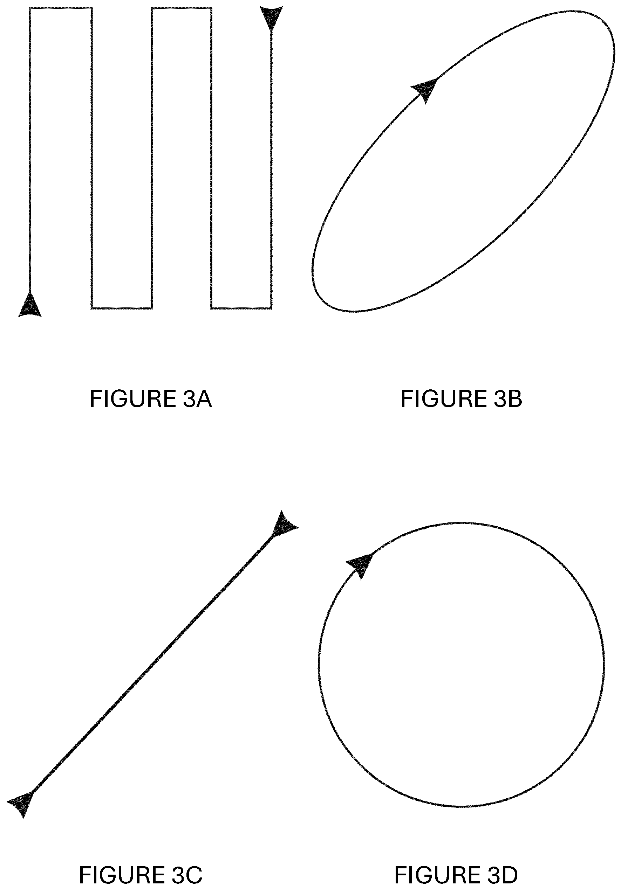

The virtual antenna array 120 implements M possible antenna positions, denoted in Figure 2 as 1, ..., m, ..., M. The virtual antenna array 120 is fed by a single power supply (not shown) through a single RF transmission-reception chain 116. The virtual antenna array 120 is implemented either using a single real antenna configured to move mechanically to occupy M different antenna positions in space, or using M real antennas disposed in M different antenna positions and configured to be successively fed by the single RF transmission-reception chain 116 by means of RF switching techniques. In any of the implementations, a single RF chain 116 feeds the virtual antenna array 120. Figures 3A-3D show examples of possible trajectories followed by the virtual antenna array 120 comprised in the device 100. Figure 3A shows a meanderline trajectory. Figure 3B shows an elliptical trajectory. Figure 3C shows a linear trajectory. Figure 3D shows a circular trajectory.

One skilled in the art will understand that the device 100 may be equipped with other elements or blocks, such as power supplies, communications means and interfaces with the main core network, an aerodynamical radome to protect the array 120, a rotary RF/optical joint, active or passive matching networks, etc.

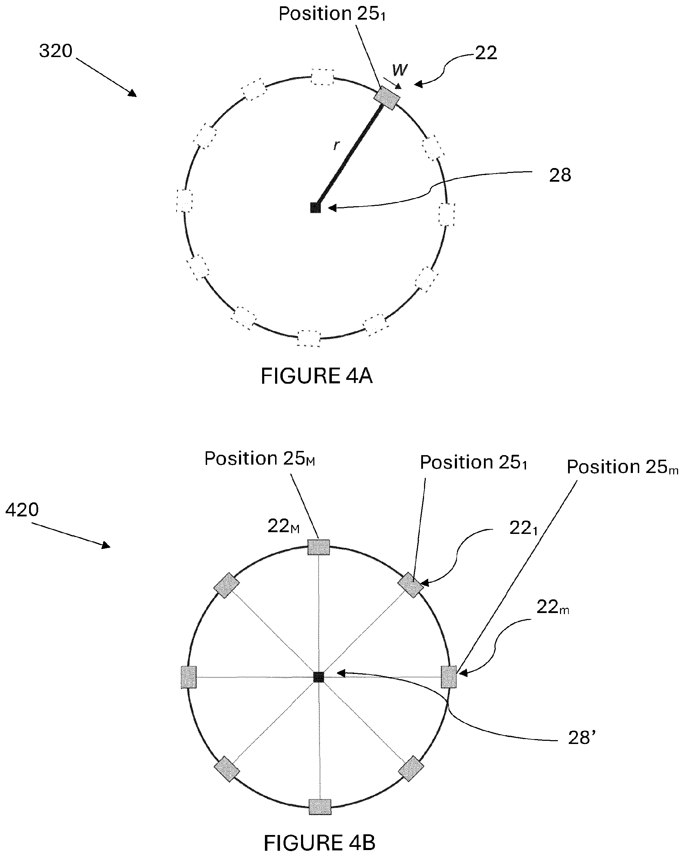

Figures 4A and 4B show two possible specific implementations of the virtual antenna array.

In Figure 4A, the virtual antenna array 320 comprises a single real antenna 22 configured to move mechanically to occupy M different antenna positions 25₁, ... 25_{M} in space. The connection 28 to the RF chain 116 is shown. The single real antenna 22 can rotate around the center 28 of a circle, generating a circular and planar VA. The antenna must be mechanically and electrically connected to the center of rotation 28. The fundamental parameters of the VA are shown in Figure 4A and include the radius of rotation (r) and the angular speed of rotation (w). The movement of the antenna 22 can be continuous or discrete (step-by-step). Thus, a virtual circular array is obtained. The advantage of the circular array is that the phase center of the array is defined by the phase of the signals received at the center of the array. An electric motor, not shown, is required to make the antenna 22 rotate around the center of rotation 28.

In Figure 4B, the virtual antenna array 420 comprises M real antennas 22₁, ... , 22ₘ, ..., 22_{M} disposed in M different antenna positions 25₁, ... 25_{M} configured to be successively fed by the single RF transmission-reception chain 116 by means of RF switching. 28' represents the connection to the RF chain 116 by means of RF switching techniques. In other words, each real antenna 22ₘ is successively fed from the single RF chain 116 through a RF switch or a combination of several RF switches (not shown). The use of a single RF switch or a combination of several RF switches depends on the size of the array, M. This embodiment offers significant structural and mechanical advantages and is particularly suitable if the antennas are constructed using microstrip technology. The final result is entirely equivalent to that of a single antenna (Figure 4A) moving, for example, step-by-step. However, it is noticeable to point out that the solution in Figure 4A introduces three advantages: 1) the possibility to eliminate the restrictions of inter-element spacing to avoid coupling effects between antenna elements, 2) makes it possible to increase the number of antennas M comprising the virtual array, and 3) for large arrays, the overall size and weight of the virtual array in Figure 4B would be higher. Figure 4B illustrates a possible implementation of a circular VA 420 formed by microstrip antennas. At the center 28 of the circle, the switch/es (not shown) successively connect/s the single RF chain 116 to the different antennas 22₁, ... , 22ₘ, ... , 22_{M}.

The TDD communication is carried out by ordering the signals into frames (and subframes, if necessary) as is customary for example in mobile communication systems. In particular, to establish the TDD communication, the virtual antenna array 120, 320, 420 of the device 100 must go twice through all the M antenna positions 25₁, ... 25_{M}. Each travelling along the M antenna positions is done in one time frame. For example, when the virtual antenna array 320 is implemented as a single real antenna 22 configured to move mechanically to successively occupy the M different antenna positions 25₁, ... 25_{M}, during a first time frame the single real antenna 22 is configured to successively move along the M different positions 25₁, ... 25_{M} and during the second time frame the single real antenna 22 is configured to again successively move along the M different positions 25₁, ... 25_{M}. And, for example, when the virtual antenna array 420 is implemented as M real antennas disposed in M different antenna positions 25₁, ... 25_{M} configured to be successively fed by the single RF transmission-reception chain by means of RF switching, during the first time frame each of the M real antennas 22₁, ..., 22ₘ, ..., 22_{M} is successively fed by the single RF transmission-reception chain, so that all the M real antennas become successively active, and during the second time frame each of the M real antennas 22₁, ..., 22ₘ, ..., 22_{M} is again successively fed by the single RF transmission-reception chain, so that all the M real antennas become again successively active.

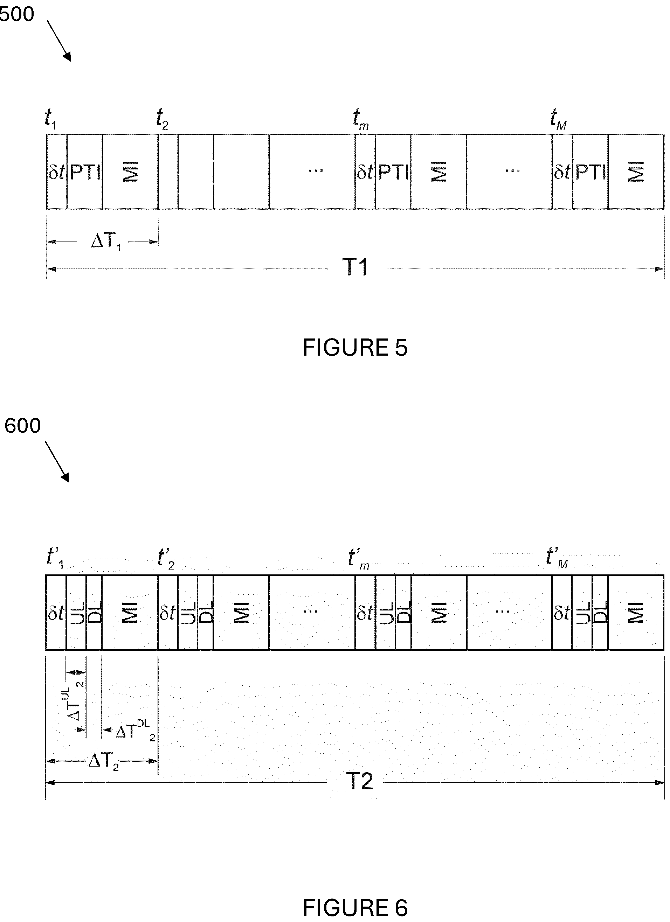

Figures 5 and 6 respectively represent a schematic structure of a first frame 500 and a second frame 600 according to embodiments of the invention in communication of the device 100 with the user terminals 500₁, 500₂, ... 500_{q}, ..., 500_{Q}. Each frame 500, 600 has a respective time duration of T₁, T₂. In communication of the device 100 with the user terminals 500₁, 500₂, ... 500_{q}, ..., 500_{Q}, the first frame 500 is followed by the second frame 600. The sum of the time duration of the two frames 500, 600 is called coherence interval (Chl). In the shown embodiment: Chl = T₁ + T₂. In applications in which the TDD communication requires or uses more than two frames, the coherence interval is the sum of all the involved frames. A fundamental condition is that this duration Chl is equal to or less than the coherence time of the channel, *T_{ch}.* This latter parameter depends on the operating frequency, the speeds of the user terminals and the speed of the device 100 (if it is moving), and the speeds of objects in the surrounding environment. The duration of each frame 500, 600 corresponds to the time required for the virtual antenna array 120, 320, 420 to traverse the entire trajectory (all the M antenna positions). It must be noticed that it is not necesasary that T₁ = T₂.

In other words, the virtual antenna array 120, 320, 420 with which the device 100 is equipped must transmit and/or receive signals in at least two time periods, i.e., in at least two time frames, in each of which the virtual antenna array will complete a full pass along the trajectory, passing at least twice (once per time frame) through the M positions that form the virtual array.

In the first time frame 500, of duration T₁, the virtual antenna array 120, 320, 420 will establish a first duplex communication with the different user terminals, the result of which will be the estimation of the complete MIMO channel matrix. In particular, during the first time frame 500, which is divided into M time slots, the virtual antenna array 120, 320, 420 is configured to receive, by each of the M antenna positions 25₁, ... 25_{M} which are visited or active (one per time slot), in one time slot in which the respective antenna position 25₁, ... 25_{M} is active (each antenna position is active in a single time slot), a pilot signal sent from each user terminal of the Q user terminals 500₁, ... 500_{q}, ... 500_{Q}, and the processing means 110 is configured to estimate, from the received pilot signals, a MIMO channel matrix of order M x Q whose elements are radiochannels.

In the second time frame 600, of duration T₂, the virtual antenna array 120, 320, 420 will establish a second duplex communication with the different user terminals under the coverage of the device 100. In the second time frame 600, the beamforming characteristic of MIMO systems is performed, and the exchange of information signals between the user terminals and the device 100 occurs in the UL, in the DL, or both (UL and DL). It is noted that Figure 6 shows a particular embodiment in which in the second time frame 600 exchange of information signals both in UL and DL occurs. However, depending on the application, only information signals in UL or only information signals in DL may occur. In particular, during the second time frame 600, which is divided into M time slots: either (1) the virtual antenna array 120, 320, 420 is configured to receive, by each of the M antenna positions 25₁, ... 25_{M} in one time slot in which the respective antenna position 25₁, ... 25_{M} is active (or visited), an information signal sent from each user terminal of the Q user terminals 500₁, ... 500_{q}, ... 500_{Q} (each user terminal repeats M times the information signal it needs to transmit) and the processing means 110 is configured to estimate, from the received signals (it is noted that these signals are received at the device 100 without discriminating which information is originated at which user terminal) and from the estimated channel matrix, the information signal sent by each one of the Q user terminals; or (2) the virtual antenna array 120, 320, 420 is configured to transmit, by each of the M antenna positions 25₁, ... 25_{M} in the time slot in which the respective antenna position 25₁, ... 25_{M} is active, a downlink signal (this downlink signal is sent to all the Q user terminals, but can carry specific information for each one or some of them); or (3) the virtual antenna array 120, 320, 420 is configured to receive, by each of the M antenna positions 25₁, ... 25_{M} in one time slot in which the respective antenna position 25₁, ... 25_{M} is active, an information signal sent from each user terminal of the plurality of user terminals 500₁, ... 500_{q}, ...500_{Q} and the processing means 110 is configured to estimate, from the received signals and from the estimated channel matrix, the information signal sent by each one of the Q user terminals; and transmit, by each of the M antenna positions 25₁, ... 25_{M} in the time slot in which the respective antenna position 25₁, ... 25_{M} is active, a downlink signal.

The structure of the first frame 500 as shown in the embodiment of Figure 5 is disclosed next. The first frame 500 of duration T1 is divided into M time slots. Each time slot has duration ΔT₁=T1/M. M is the number of antenna positions that the virtual antenna array can visit (in the event the array is made of M real antennas) or activate (in the event the array is made of a single real antenna configured to move over M different physical positions). The beginning of each time slot, at time *tₘ,* with m=1, 2, ..., M is determined by the transmission from the device 100 to all the user terminals 500₁, ... 500_{q}, ...500_{Q} of a beacon signal with a duration δ*ₜ*. This signal is mainly intended for synchronization tasks in time and/or frequency of each user terminal of a plurality of the set of Q user terminals. This signal can be additionally used to activate the user terminals (for example, it can be used to wake them up from an idle state). The beginning of each time slot is given by: ${t}_{m} = {t}_{1} + \left(m-1\right) Δ {T}_{1} , m = 1 , 2 , … M$

In each of the moments (time instants) *tₘ,* also referred to as timestamps, the antenna position 25₁, ... 25_{M} will occupy the m-th position of the virtual antenna array. In other words, during the first time frame 500, the virtual antenna array 120, 320, 420 transmits, from each of the M antenna positions 25₁, ... 25_{M} in the time slot in which the respective antenna position 25₁, ... 25_{M} is active, the beacon signal.

After the beacon signal, each user terminal 500₁, ... 500_{q}, ...500_{Q} sends a pilot signal p_{q}(t) for the user identification and estimation of the radio channel *h_{mq}* that connects each user terminal q with the m-th antenna position. The pilot signal p_{q}(t) has a predefined duration PTI (pilot time interval) which may be selected or defined on a case-by-case basis. Each user terminal repeatedly sends the same pilot signal, meaning that in each of the M time slots a user terminal sends the same pilot signal (which is its pilot signal). The processing means 110 of the device 100 can then estimate the channel matrix by successively estimating from the pilot signals received by all the antenna position 25₁, ... 25_{M}, the radiochannels *h_{mq}* of the Q terminal users. In the embodiment shown in Figure 5, this is done by configuring the processing means 110 to estimate the channel matrix by successively estimating, after receiving the pilot signals by each respective antenna position 25₁, ... 25_{M}, the radiochannels of the Q terminal users. In this case, after reception of the pilot signals, the device 100 (in particular, its controlling means 118) has a time interval, the moving interval (MI), during which the VA controls (controlling means) 118 act to synchronize and order the movement of the single real antenna from position m to m+1. Alternatively, in the case the VA comprises M real antennas 22₁, ..., 22ₘ, ..., 22_{M} configured to be successively fed by the single RF chain 116 by means of RF switching techniques, has a time interval, which for simplicity, we continue to call moving interval (MI), during which the VA controlling means 118 act to synchronize and order for the RF switch -or switches- commutation between antennas located at positions m to m+1. Moreover, during the MI interval the device 100 (in particular, its processing means 110) uses this available time to estimate the Q channels *h_{mq},* for *q*=1,2,...,Q. This time interval is referred to as the channel estimation time interval (CSTI), and must fulfill that CSTI lasts less than MI. These operations are repeated successively in each of the M time slots. Alternatively, although it is a less efficient option, the channel matrix can be estimated at the end of a complete first frame 500. Upon completion of this sequence, the virtual antenna array will have traversed the entire trajectory (either by moving the single real antenna along M positions or by activating one by one the M real antennas) within the time period T₁, and the signaling corresponding to this time frame 500 will be completed. As a result, the device 100 will have a complete estimate of the MIMO channel matrix of order M×Q: **H***^{UL}*, whose elements are the estimates of the M×Q radiochannels *h_{mq}.*

The structure of the second frame 600 as shown in the embodiment of Figure 6 is disclosed next. The second frame 600 of duration T2 is divided into M time slots. Each time slot has a duration ΔT₂=T2/M. Like in the first frame 500, M is the number of antenna positions that the virtual antenna array can visit (in the event the array is made of M real antennas) or activate (in the event the array is made of a single real antenna configured to move over M different physical positions). Each time slot of the M time slots begins at timestamp *t'ₘ,* with m=1, 2, ..., M. The beginning of a time slot is determined by the transmission from the device 100 to all the user terminals 500₁, ... 500_{q}, ...500_{Q} of a beacon signal with a duration δ*ₜ*. This signal is typically the same beacon signal sent in the first time frame 500. The beginning of each time slot is given by: $t {′}_{m} = t {′}_{1} + \left(m-1\right) Δ {T}_{2} , m = 1 , 2 , … M$

In each of the timestamps, *t'ₘ,* the antenna position 25₁, ... 25_{M} will occupy the m-th position of the virtual antenna array for the second time (all the antenna positions have already been visited once in the first time frame 500). In other words, during the second time frame 600, the virtual antenna array 120, 320, 420 transmits, from each of the M antenna positions 25₁, ... 25_{M} in the time slot in which the respective antenna position 25₁, ... 25_{M} is active, the beacon signal.

After the beacon signal is sent in each of the M time slots, the user terminals 500₁, ... 500_{q}, ...500_{Q} repeatedly send their information signal during each of the M time slots. Each user terminal sends its own information signal M times (one per time slot). In

Figure 6 this is done at M sub-slots of predetermined duration ${ΔT}_{2}^{UL}$ following each beacon signal. During this time interval of duration ${ΔT}_{2}^{UL}$, each user terminal transmits its own information signal ${s}_{q}^{m} \left(t\right)$. The duration ${ΔT}_{2}^{UL}$ is smaller than the duration ΔT₂. The transmission of the information signal is repeated throughout the second frame 600, in each of the M sub-slots.

If the information signal sent by the q-th user terminal is *s_{q}(t),* then: ${s}_{q}^{m} \left(t\right) = \left\{\begin{matrix}{s}_{q} \left(t-\left(m-1\right)Δ{T}_{2}\right) , if t ∈ \left[{t}_{m},{t}_{m}+Δ{T}_{m}^{UL}\right] \\ 0 , otherwise\end{matrix}\right. , m = 1 , 2 , … , M .$

The complete signal transmitted by the q-th user terminal in time frame 600 can be written as: ${x}_{q} \left(t\right) = {\sum }_{m = 1}^{M} {s}_{q}^{m} \left(t\right) = {\sum }_{m = 1}^{M} {s}_{q} \left(t-\left(m-1\right)Δ{T}_{2}\right) .$

Once time frame 600 is completed, the user terminals 500₁, ... 500_{q}, ...500_{Q} will have transmitted Q signals, which can be symbolically grouped into a vector: ${X}_{Q} = {\left({x}_{1},{x}_{2},…,{x}_{Q}\right)}^{T} ,$ where T denotes the transpose operation of a vector.

Now, from the received signals and from the estimated channel matrix, the processing means 110 of the device 100 estimates the information signals sent by each of the Q user terminals. This is done once the whole second frame 600 has been completed.

Still referring to the embodiment shown in Figure 6, in each of the M time slots, the virtual antenna array of the device transmits, successively by each of the M antenna positions 25₁, ... 25_{M} in the time slot in which the respective antenna position 25₁, ... 25_{M} is active, a downlink signal. This downlink signal *ẑₘ*(*t*) is a precoded combination of dedicated signals to be sent to the Q user terminals using a linear combining method determined by its combining matrix V , of size QxM. In principle, the dedicated signals are different from each other. In particular, in Figure 6 this is done at M sub-slots of predetermined duration ${ΔT}_{2}^{DL}$ which follow each sub-slot of duration ${ΔT}_{2}^{UL}$. During this time interval of duration ${ΔT}_{2}^{DL}$, the device 100 transmits to the user terminals the signals corresponding to each of them, precoded appropriately to perform beamforming or spatial multiplexing. The duration ${ΔT}_{2}^{DL}$ is smaller than the duration ΔT₂. The transmission of this downlink signal is repeated throughout the second frame 600, in each of the M sub-slots. The downlink signal *ẑₘ*(*t*) is as follows: ${\hat{z}}_{m} \left(t\right) = {\sum }_{k = 1}^{Q} {v}_{mk} {s}_{k} \left(t\right)$ where *vₘₖ* is the (m, k)-th element of the combining matrix V . Moreover, *sₖ*(*t*) is, in the case of the DL, the signal transmitted from the device 100 to the k-th user terminal.

Then, the user terminals 500₁, ... 500_{q}, ...500_{Q}, during the second time frame 600, receive the downlink signal and decode its dedicated signal.

In particular, the signal received at the q-th user terminal, coming from the virtual antenna array in the m-th antenna position (and therefore received in the m-th sub-slot), is given by: ${r}_{q}^{m} \left(t\right) = {h}_{qm} {\hat{z}}_{m} \left(t\right) .$

Next, the signal processing performed by the processing means 110 at each of the time frames 500, 600, or after each of the time frames 500, 600, is detailed next.

Regarding the first time frame 500, as already mentioned, during the duration **T1** of the first time frame 500 the device 100 estimates the complete MIMO channel matrix: **H***^{UL}*, of size MxQ, whose elements are the subchannels *h_{mq}*. For this, it uses the pilot signals transmitted in the M time slots by the Q user terminals. It is important to highlight that, by reciprocity, it holds that *h_{qm}* = *h_{mq}.* Due to this property, the device 100 also has knowledge of the matrix **H***^{DL}* of size QxM. Preferably, in each CSTI a row of this channel is built.

Regarding the second time frame 600, the processing in the UL is as follows. After the completion of the second time frame 600, the device 100 proceeds to estimate the signals transmitted by the Q user terminals using a linear combining method determined by its combining matrix V , of size QxM. The received signal at the device 100 can be expressed in vector form as: ${Y}_{M} = {H}^{UL} {X}_{Q} ,$ where *Y_{M}* is a vector of size M, with elements being the signals received by the virtual antenna array at the m-th antenna position: ${Y}_{M} = {\left({y}_{1},{y}_{2},…,{y}_{M}\right)}^{T}$ ${y}_{M} = {\sum }_{q = 1}^{Q} {h}_{mq} {x}_{q}$

The estimation of the signal transmitted by the user terminals is obtained through a linear combining method: $\hat{{S}_{Q}} = V {Y}_{M} .$

Without loss of generality, in the particular case of using the Maximum Ratio Combining (MRC) method, we have that V = (**H***^{UL}*)^{H}, where superscript "H" denotes the Hermitian operation on a matrix. Therefore, ${v}_{km} = {h}_{km}^{∗} = {h}_{mk}^{∗}$, in which (·)* is the conjugate of the channel between the k-th user terminal and the m-th antenna position. Thus, we obtain: $\hat{{S}_{Q}} = V {Y}_{M} = {\left({H}^{UL}\right)}^{H} {H}^{UL} {X}_{Q} .$

The elements of the received signal vector are given by: $\hat{{s}_{q}} = {\sum }_{m = 1}^{M} {\sum }_{k = 1}^{Q} {h}_{mq}^{∗} {h}_{mk} {x}_{k} = {\sum }_{m = 1}^{M} {\sum }_{k = 1}^{Q} {h}_{mq}^{∗} {h}_{mk} {s}_{k} .$

To obtain the last equality, it should be noted that: ${x}_{k} \left(t\right) = {\sum }_{m = 1}^{M} {s}_{k}^{m} \left(t\right) = {\sum }_{m = 1}^{M} {s}_{k} \left(t-\left(m-1\right)Δ{T}_{2}\right) ,$ and: ${s}_{k}^{m} \left(t\right) = \left\{\begin{matrix}{s}_{k} \left(t-\left(m-1\right)Δ{T}_{2}\right) , if t ∈ \left[{t}_{m},{t}_{m}+Δ{T}_{m}^{UL}\right] \\ 0 , otherwise\end{matrix}\right. , m = 1 , 2 , … , M .$

That is, the elements of the vector *X_{Q}* exist in different time intervals, and outside of them, they are zero. In other words, the information signal exists repeatedly in each time slot and is 0 out of each time slot.

Finally, it is concluded that: $\hat{{s}_{q}} = {\sum }_{m = 1}^{M} {\left|{h}_{mq}\right|}^{2} {s}_{q} + {i}_{q} = {s}_{q} {\sum }_{m = 1}^{M} {\left|{h}_{mq}\right|}^{2} + {i}_{q}$ where *i_{q}* is an interference term between symbols given by: ${i}_{q} = {\sum }_{m = 1}^{M} {\sum }_{\begin{matrix}k = 1 \\ k \neq q\end{matrix}}^{Q} {h}_{mq} {h}_{mk}^{∗} {s}_{k} ,$ that tends to zero when the favorable propagation condition is met.

Regarding the second time frame 600, the processing in the DL is as follows. Each user terminal, in each of the subslots ${ΔT}_{m}^{DL}$, receives and stores in a memory the signal ${r}_{q}^{m} \left(t\right)$, which has been previously defined: ${r}_{q}^{m} \left(t\right) = {h}_{qm} {\hat{z}}_{m} \left(t\right) .$

At the end of the second time frame 600, each user terminal performs the summation of the previously stored signals, obtaining an estimate of the signal transmitted by the device 100: $\hat{{s}_{q}} = {\sum }_{m = 1}^{M} {h}_{qm} {\hat{z}}_{m} \left(t\right) = {\sum }_{m = 1}^{M} {\sum }_{k = 1}^{Q} {h}_{mq} {h}_{mk}^{∗} {s}_{k} = {s}_{q} {\sum }_{m = 1}^{M} {\left|{h}_{mq}\right|}^{2} + {g}_{q}$ where *gₖ* is an interference term between symbols that tends to zero under favorable propagation conditions: ${g}_{q} = {\sum }_{m = 1}^{M} {\sum }_{\begin{matrix}k = 1 \\ k \neq q\end{matrix}}^{Q} {h}_{mq} {h}_{mk}^{∗} {s}_{k} .$

The invention is applicable in different fields, such as public and private mobile communication systems, wireless LANs, the loT in all the envisioned services including smartcities, smartfarm, industrial environments and military applications.

### EXAMPLE OF EXECUTION

### Practical application

Sensors for monitoring hard to reach areas, such as forest, large farms, deserts, marine and offshore sensing. We focus on the case of sensors that monitor parameters of interest in the forest, for example, temperature, humidity, movement of animals or people, etc.

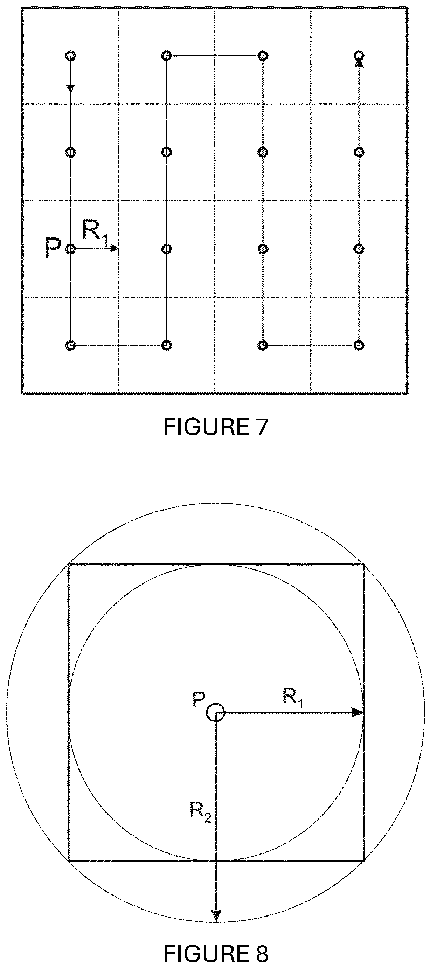

It is assumed a wooded area of difficult access, which is inscribed in a square area of 2 km on each side, that is, the area surface is 4 km². Moreover, it is considered that the remote sensing is carried out from an UAV with the device of the invention embarked upon it or any other mobile platform. Concerning the area under study, it is divided into 16 square sectors or cells of 500 m on each side, in the centre of which the UAV will stop to provide coverage to Q_{c} sensors randomly distributed in each of these cells. If we consider a sensor density of the order of 40 sensor/ km², this implies that Q_{c} ≈ 10 per cell. Details of the canonical field along with the trajectory considered for the UAV in this particular example are depicted in Figure 7.

### General characteristics

Circular Virtual Array with M=30 antenna positions. Mechanical movement.
Working frequency: 868 MHz ISM band
Bandwidth: 0.4 MHz
Wavelength: λ= 0.3456 m
Radius of the circular array: *r*= 0.7 m, *r≈* 2λ
Inter-element spacing of the VA: ≈ 0.42λ
Maximum transmitted power (UL and DL): *Pₜ*= 14 dBm
Sensitivity (UL and DL): *Pₜₕ=* -130 dBm

### Characteristics of the antenna element

The canonical square-shaped cell to be illuminated at each UAV position, P in Figure 7, makes it necessary to take into consideration constraints on the directivity of the antenna. In a first approximation, an antenna with omnidirectional coverage and different beamwidths to cover the area of each cell is considered, as shown in Figure 8.

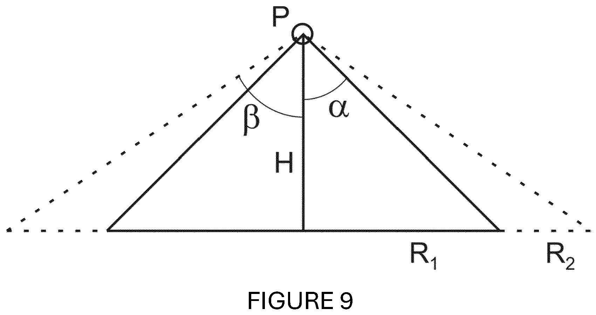

If a height of the UAV above the ground of H=100 m is considered, then R₁=250 m, R₂=354 m and, according to Figure 9, the 3 and 6 dB antenna beamwidths are 2α=136° and 2β=150°, respectively.

### Power balance

Let us consider *Pₜ, Pₜₕ,* an antenna gain for any sensor or user terminal (UT) G_{UT}=0 dB, along with the worst case for the UAV antenna gain, G_{AUAV}=-6dB (at R₂). Considering that the propagation losses are the sum of the free space losses, *L_{bf},* and an additional constant of 20 dB to account for the effect of the clutter, *L_{clutter},* it is obtained that: ${P}_{r} \left(dBm\right) = {P}_{t} \left(dBm\right) - {G}_{AUAV} + {G}_{UT} - {L}_{bf} - {L}_{clutter}$ ${L}_{clutter} \approx 20 dB$ ${L}_{bf} = 32.45 + 20 log \left(f\left(MHz\right)\right) + 20 log \left(d\left(km\right)\right) = 82.2 dB$ ${P}_{r} = - 94.2 dBm .$

Thus, the available margin is significant: $M = {P}_{r} - {P}_{th} = 35.8 dB .$

This implies that the system is operating in a high-SNR regime and, therefore, the transmission powers in both UL and DL could be reduced.

### The frame structure proposed

The starting point is the channel coherence time, calculated as: ${t}_{ch} \approx \frac{1}{4 {ν}_{rms}} = \frac{λ}{2 \sqrt{2 \left({V}_{R}^{2}+{V}_{T}^{2}+{V}_{eff}^{2}\right)}} ;$ in which *vᵣₘₛ* is the root mean square of the Doppler frequency, *V_{T}, V_{R}* and *V_{eff}* represent the velocity of the transmitter, receiver and the effective velocity of the clutter surrounding the sensors, respectively. In both links, UL and DL, concerning the sensors side, *V_{T}=V_{R}=*0, respectively; as the sensors remain static. However, concerning the UAV side, the UAV inherent instabilities make it necessary to introduce for both links a residual speed, so a *V_{T}=V_{R}=*0.3 m/s has been considered. Finally, concerning the movement of the vegetation surrounding the sensors due to wind, a value *V_{eff}*=0.15 m/s has been considered. With these plausible values it is obtained that *t_{ch}≈*360 ms.

It is assumed, for simplicity, that the two frames last the same amount of time: ${T}_{1} = {T}_{2} = \frac{{t}_{ch}}{2} = 180 ms .$

It must be fulfilled that *T*_{1,2}*=M·ΔT*_{1,2}*,* so each timeslot is proposed to have a duration *ΔT*_{1,2}*=* 6 ms. Within *ΔT*_{1,2}*,* a MI=4 ms has been considered for the antenna element movement between two contiguous positions. This MI period can be used by the device to carry out CSTI tasks. According to the MI interval, the angular speed of rotation of the antenna should be: $W = \frac{2 π}{120} {10}^{3} = 52.4 \frac{rad}{s} = 8.34 rps = 500 rpm .$

**The remaining** 2 ms in each *ΔT*_{1,2} include periods for beacon signals (δ*t*), PTI and UL and/or DL information, depending on the link.

Considering the information provided in the Description of a way of carrying out the invention, and using MRC as the combining method, an array gain on the order of 30 would be achieved.

Taking into account a reasonable speed of the drone of 20 km/h and the trajectory proposed in Figure 7, the approximate time required to sweep the area will be 24 minutes. With these data, it can be stated as a first approximation that the surface scanning speed for the proposed example would be of 10 km²/h.

In this text, the term "comprises" and its derivations -such as "comprising", etc.- should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art -for example, as regards the choice of materials, dimensions, components, configuration, etc.-, within the general scope of the disclosure as defined in the claims.

## Claims

1. A device (100), comprising:
a virtual antenna array (120, 320, 420) fed by a single RF transmission-reception chain (116), the virtual antenna array (120, 320, 420) comprising either a single real antenna configured to move mechanically to occupy M different antenna positions (25₁, ... 25_{M}) in space, or M real antennas disposed in M different antenna positions (25₁, ... 25_{M}) configured to be successively fed by the single RF transmission-reception chain by means of a RF switching technique; and
processing means (110);
wherein the device (100) is designed to:
during a first time frame divided into M time slots, configure the virtual antenna array (120, 320, 420) to receive, by each of the M antenna positions (25₁, ... 25_{M}) in one time slot in which the respective antenna position (25₁, ... 25_{M}) is active, each antenna position being active in a single time slot, a pilot signal sent from each user terminal of a plurality of Q user terminals (500₁, ... 500_{q}, ...500_{Q}), and configure the processing means (110) to estimate, from the received pilot signals, a channel matrix of order M x Q; and
during a second time frame divided into M time slots, configure the virtual antenna array (120, 20, 21) to:
receive, by each of the M antenna positions (25₁, ... 25_{M}) in one time slot in which the respective antenna position (25₁, ... 25_{M}) is active, an information signal sent from each user terminal of the plurality of user terminals (500₁, ... 500_{q}, ... 500_{Q}) and configure the processing means (110) to estimate, from the received signals and from the estimated channel matrix, the information signal sent by each of the Q user terminals; or
transmit, by each of the M antenna positions (25₁, ... 25_{M}) in the time slot in which the respective antenna position (25₁, ... 25_{M}) is active, a downlink signal; or
receive, by each of the M antenna positions (25₁, ... 25_{M}) in one time slot in which the respective antenna position (25₁, ... 25_{M}) is active, an information signal sent from each user terminal of the plurality of user terminals (500₁, ... 500_{q}, ...500_{Q}) and configure the processing means (110) to estimate, from the received signals and from the estimated channel matrix, the information signal sent by each of the Q user terminals; and transmit, by each of the M antenna positions (25₁, ... 25_{M}) in the time slot in which the respective antenna position (25₁, ... 25_{M}) is active, a downlink signal.

2. The device (100) of claim 1, wherein when the virtual antenna array (120, 320) is implemented as a single real antenna (22) configured to move mechanically to occupy M different antenna positions (25₁, ... 25_{M}) in space, during the first time frame the single real antenna (22) is configured to successively move along the M different positions (25₁, ... 25_{M}) and during the second time frame the single real antenna (22) is configured to successively move along the M different positions (25₁, ... 25_{M}).

3. The device (100) of claim 1, wherein when the virtual antenna array (120, 340) is implemented as M real antennas disposed in M different antenna positions (25₁, ... 25_{M}) configured to be successively fed by the single RF transmission-reception chain by means of RF switching, during the first time frame each of the M real antennas (22₁, ..., 22ₘ, ..., 22_{M}) is successively fed by the single RF transmission-reception chain and during the second time frame each of the M real antennas (22₁, ..., 22ₘ, ..., 22_{M}) is successively fed by the single RF transmission-reception chain.

4. The device of any of the preceding claims, wherein the device (100) is further designed to, during the first time frame, configure the virtual antenna array (120, 320, 420) to transmit, from each of the M antenna positions (25₁, ... 25_{M}) in the time slot in which the respective antenna position (25₁, ... 25_{M}) is active, a beacon signal.

5. The device of any of the preceding claims, wherein the processing means (110) is further configured to estimate the channel matrix by successively estimating, after receiving each pilot signal by each respective antenna position (25₁, ... 25_{M}), the radiochannels of the Q terminal users.

6. A radio communication system, comprising:
a plurality of user terminals (500₁, ... 500_{q}, ...500_{Q}) located within a serving area; and
a device (100) according to any one of claims 1-5.

7. **The** radio communication system of claim 6,
wherein at least some of the plurality of user terminals (500₁, ... 500_{q}, ...500_{Q}) are configured to, during the first time frame, successively send a pilot signal during each of the M times slots,
and wherein the device (100) is configured, during the first time frame, to estimate the channel matrix from the pilot signals received from the at least some user terminals.

8. The radio communication system of claim 7,
wherein at least some of the plurality of user terminals (500₁, ... 500_{q}, ...500_{Q}) are configured to, during the second time frame, successively send its own information signal during each of the M times slots, and
wherein the device (100) is configured to estimate, from the received signals and from the estimated channel matrix, the information signal sent by each of the Q user terminals.

9. The radio communication system of either claim 7 or 8,
wherein the device (100) is configured to transmit, by each of the M antenna positions (25₁, ... 25_{M}) in the time slot in which the respective antenna position (25₁, ... 25_{M}) is active, a broadcast signal, wherein the downlink signal is a precoded combination of dedicated signals to be sent to the at least some of the Q user terminals; and
wherein at least some of the plurality of user terminals (500₁, ... 500_{q}, ...500_{Q}) are configured to, during the second time frame, receive the downlink signal and decode its dedicated signal.

10. The radio communication system of either claim 7 or 8,
wherein the device (100) is configured to transmit, by each of the M antenna positions (25₁, ... 25_{M}) in the time slot in which the respective antenna position (25₁, ... 25_{M}) is active, a RF power transfer signal, wherein the downlink signal is a precoded combination of power transfer signals intended to transfer power to at least some of the Q user terminals; and
wherein at least some of the plurality of user terminals (500₁, ... 500_{q}, ...500_{Q}) are configured to, during the second time interval, receive the downlink beamforming power transfer signal and collect the RF transported power.

11. A method, comprising:
during a first time frame (500) divided into M time slots:
from a virtual antenna array (120, 320, 420) disposed at a device (100), the virtual antenna array being fed by a single power supply through a single RF transmission-reception chain (116), the virtual antenna array (120, 20, 21) comprising either a single real antenna configured to move mechanically to occupy M different antenna positions (25₁, ... 25_{M}) in space, or M real antennas disposed in M different antenna positions (25₁, ... 25_{M}) configured to be successively fed by the single RF transmission-reception chain by means of RF switching (120, 20, 21), receiving by each of the M antenna positions (25₁, ... 25_{M}) in one time slot in which the respective antenna position (25₁, ... 25_{M}) is active, a pilot signal sent from each user terminal of a plurality of Q user terminals (500₁, ... 500_{q}, ...500_{Q}), and
estimating, at the device (100), from the received pilot signals, a channel matrix of order M x Q,
during a second time frame (600) divided into M time slots,
receiving, at the virtual antenna array (120, 20, 21) of the device (100), by each of the M antenna positions (25₁, ... 25_{M}) in one time slot in which the respective antenna position (25₁, ... 25_{M}) is active, an information signal sent from each user terminal of the plurality of user terminals (500₁, ... 500_{q}, ...500_{g}); and estimating, at the device (100), from the received signals and from the estimated channel matrix, the information signal sent by each of the Q user terminals; or
transmitting, by each of the M antenna positions (25₁, ... 25_{M}) of the device (100) in the time slot in which the respective antenna position (25₁, ... 25_{M}) is active, a downlink signal; or
receiving, at the virtual antenna array (120, 20, 21) of the device (100), by each of the M antenna positions (25₁, ... 25_{M}) in one time slot in which the respective antenna position (25₁, ... 25_{M}) is active, an information signal sent from each user terminal of the plurality of user terminals (500₁, ... 500_{q}, ...500_{Q}); estimating, at the device (100), from the received signals and from the estimated channel matrix, the information signal sent by each of the Q user terminals; and transmiting, by each of the M antenna positions (25₁, ... 25_{M}) of the device (100) in the time slot in which the respective antenna position (25₁, ... 25_{M}) is active, a downlink signal.

12. A method, comprising:
during a first time frame (500) divided into M time slots:
from a plurality of user terminals (500₁, ... 500_{q}, ...500_{Q}), successively send a respective pilot signal during each of the M time slots,
from a virtual antenna array (120, 320, 420) disposed at a device (100), the virtual antenna array being fed by a single power supply through a single RF transmission-reception chain (116), the virtual antenna array (120, 20, 21) comprising either a single real antenna configured to move mechanically to occupy M different antenna positions (25₁, ... 25_{M}) in space, or M real antennas disposed in M different antenna positions (25₁, ... 25_{M}) configured to be successively fed by the single RF transmission-reception chain by means of RF switching (120, 20, 21), receiving by each of the M antenna positions (25₁, ... 25_{M}) in one time slot in which the respective antenna position (25₁, ... 25_{M}) is active, the pilot signals sent from the user terminals (500₁, ... 500_{q}, ...500_{Q}), and
estimating, at the device (100), from the received pilot signals, a channel matrix of order M x Q,
during a second time frame (600) divided into M time slots,
either sending, from at least some of the plurality of user terminals (500₁, ... 500_{q}, ...500_{Q}) successively its own information signal during each of the M times slots; receiving, at the virtual antenna array (120, 20, 21) of the device (100), by each of the M antenna positions (25₁, ... 25_{M}) in one time slot in which the respective antenna position (25₁, ... 25_{M}) is active, information signal sent from each user terminal of the plurality of user terminals (500₁, ... 500_{q}, ...500_{Q}); and estimating, at the device (100), from the received signals and from the estimated channel matrix, the information signal sent by each of the Q user terminals; or
transmitting, by each of the M antenna positions (25₁, ... 25_{M}) of the device (100) in the time slot in which the respective antenna position (25₁, ... 25_{M}) is active, a downlink signal; and receiving, at least some of the plurality of user terminals (500₁, ... 500_{q}, ...500_{Q}), the downlink signal and decode its dedicated signal; or
sending, from at least some of the plurality of user terminals (500₁, ... 500_{q}, ...500_{Q}) successively its own information signal during each of the M times slots; receiving, at the virtual antenna array (120, 20, 21) of the device (100), by each of the M antenna positions (25₁, ... 25_{M}) in one time slot in which the respective antenna position (25₁, ... 25_{M}) is active, information signal sent from each user terminal of the plurality of user terminals (500₁, ... 500_{q}, ...500_{Q}); estimating, at the device (100), from the received signals and from the estimated channel matrix, the information signal sent by each of the Q user terminals; transmitting, by each of the M antenna positions (25₁, ... 25_{M}) of the device (100) in the time slot in which the respective antenna position (25₁, ... 25_{M}) is active, a downlink signal; and receiving, at least some of the plurality of user terminals (500₁, ... 500_{q}, ...500_{Q}), the downlink signal and decode its dedicated signal.

13. The method of claim 12, wherein, during the first time frame (500), prior to, from the plurality of user terminals, successively sending a respective pilot signal during each of the M time slots, the method comprises transmitting by each of the M antenna positions of the device, in one time slot in which the respective antenna position is active, a beacon signal.

14. The method of either claim 12 or 13, wherein, during the second time frame (600), prior to any other thing, the method comprises transmitting, by each of the M antenna positions of the device in the time slot in which the respective antenna position is active, a beacon signal.

15. A computer program product comprising instructions which, when the program is executed by a computer, cause the computer to carry out the steps of the method of claim 11.
